# EUROPEAN PATENT SPECIFICATION

(11) **EP 0 394 014 B1**
(45) Date of publication and mention of the grant of the patent: **01.09.1993**
(21) Application number: 90304152.3
(22) Date of filing: 18.04.1990
(51) Int. Cl.: H02G 1/12

(54) **Acting on end regions of cables in producing electrical harnesses**
Bearbeitung von Kabelenden beim Herstellen von elektrischen Kabelbäumen
Agir sûr les extrémites de câbles dans la production de harnais électriques

(30) Priority: 19.04.1989 JP 99596/89
(43) Date of publication of application: 24.10.1990
(73) Proprietor: NIPPON ACCHAKUTANSHI SEIZO KABUSHIKI KAISHA, Osaka (JP)
(72) Inventor: Okazaki, Takashi, Toyonakashi, Osaka (JP); Shinohara, Takashi, Takarazukashi, Hyogo (JP); Suzuki, Eiji, Toyonakashi, Osaka (JP)
(74) Representative: Purvis, William Michael Cameron

(56) References cited:
- DE-A- 2 053 222
- US-A- 2 934 982

## Description

The invention relates generally to acting on the end regions of cables in producing electrical harnesses and has particular though not exclusive application to the termination of and the connection of shielded ribbon cables to contact-type connectors so as to produce electrical harnesses. Hereinafter a shielded ribbon cable will be referred to merely as a "shielded cable".

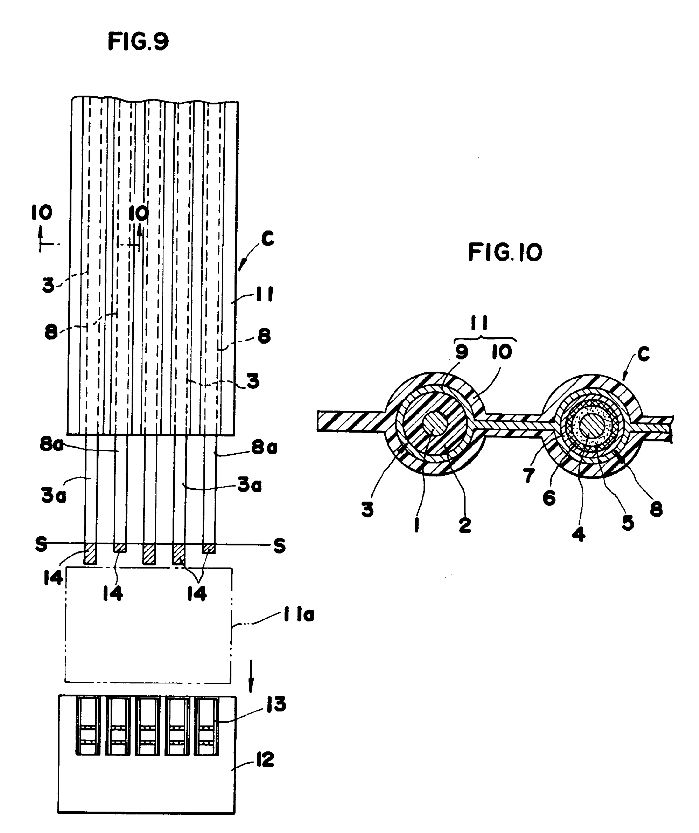

Referring to Figures 9 and 10 of the accompanying drawings, a typical shielded cable (C) of previously proposed kind comprises a signal transmission cable 3 having a core cable 1 clad in an insulating covering 2, and an earthing arrangement 8 having wires 7 and a core line 4 clad in carbon fibre 5 covered with metal wires 6 of a mesh or a winding. The signal transmission cable 3 and the earth wires 7 are mutually arranged in parallel at equal intervals and wrapped in an electrically conducting foil 9, which is covered with an outermost insulating layer 10. The covering foil 9 and the insulating layer 10 constitute a sheath 11.

When the shielded cables (C) of such a structure are individually connected to contacts 13 of a contact-type connector 12 so as to fabricate an electrical harness by means of an automatic contact-connecting apparatus, the shield cables (C) are cut to a predetermined length, and sheath portions 11a (indicated by an imaginary line in Figure 9) are removed, thereby connecting uncovered terminals 3a and 8a to the contacts 13 of the contact-type connector 12. This method has the following disadvantage:

Since the insulating covering 2 of the signal transmission cable 3 is made of flexible plastics, such as polyvinyl chloride, polyethylene, cross-linked polyethylene and foam polyethylene, it is lengthened when the sheath portion 11a is pulled. As a result, the lengths of the uncovered terminals 3a and 8a become uneven as shown in Figure 9. To equalize the lengths of them, the terminals 3a and 8a are cut along a line S-S. The cutting of cables produces scrap ends 14. The scrap ends 14 are such small pieces that they may engage between the cutting blades, stripping blades and/or moving parts of the apparatus. If they lodge in these parts, they are difficult to remove, and what is worse, they tend to cause malfunction in operating the apparatus.

In DE-A-2053222 there is disclosed a method of acting on an end region of a single, insulated wire by initially making a shallow cut in the insulation surrounding the wire, then drawing the cut portion of the insulation towards the end of the wire to expose a portion of the wire proper. The cut portion of the insulation, known as the "severed sheath", is not withdrawn fully from the wire end region. Thus, the exposed wire portion can be processed further without the end of the wire splitting or unravelling.

However, DE-A-2053222 does not discuss in detail any of the further processing which may be carried out on the exposed wire portion.

US-A-2934982 discloses an apparatus and method for acting on a single, insulated wire. The wire is initially cut transversely into two wire portions each having a cut end, and shallow cuts are made transversely of the wire portions in the insulating sheath thereof. The shallow cuts are adjacent the cut ends. The two wire portions are then stripped in opposite directions so as to separate respective sheath end portions from the remainder of the insulating sheath of each wire portion.

US-A-2934982 does not, however, address the problem of ensuring uniformity of the lengths of a series of cut wire portions, for example as would be desirable during manufacture of an electrical harness.

According to one aspect of the invention there is provided a method of acting on the end regions of cables, the method being suitable for the production of electrical harnesses and comprising the steps of: cutting a shielded cable (C) transversely thereof into two cable portions each having a cut end with an end region proximate thereto; making shallow cuts transversely of the cable portions and in the sheath thereof, to define sheath end portions, the shallow cuts being proximate the cut ends; pulling the cable portions in opposite directions while retaining sheath-end portions so as to separate them from the sheaths at the shallow cuts and thereby expose end portions of the conductors; and finally cutting the cable portions through the exposed end portions, characterised in that the method is suitable for acting on the end regions of cables each comprising a plurality of conductors arranged in parallel with one another, in that tip ends of the conductors remain in the severed sheath-end portions, and in that the final step of cutting the cable portions is carried out outside and close to the respective sheath-end portions so as to produce aligned cut ends of the conductors.

According to another aspect of the invention there is provided apparatus for acting on the end regions of cables, the apparatus being suitable for the production of electrical harnesses and comprising: a pair of first cutting blades adapted to sever a shielded cable (C) transversely thereof into two cable portions each having a cut end with an end region proximate thereto, with the first cutting blades being situated at opposite sides of a feed path (W) along which the shielded cable (C) is fed: two pairs of stripping blades to make shallow cuts transversely of the cable portions and in the sheath thereof, to define sheath end portions, with the stripping blades in each pair being situated at opposite sides of the feed path, and the two pairs being spaced apart a predetermined distance in which the first cutting blades are located; a pair of chucks to pull the respective cable portions in opposite directions so as to expose end portions of the conductors from the shallow cuts; and a pair of second cutting blades to cut the cable portions through the exposed end portions of the conductors outside and close to the sheath-end portions, characterised in that the apparatus is adapted to act on the end regions of cables each comprising a plurality of conductors arranged in parallel with one another, the stripping blades cooperate with the chucks in such a manner that tip ends of the conductors remain in the severed sheath-end portions, and each of the second cutting blades cooperates with the corresponding one of each pair of the stripping blades in such a manner that the tip ends of the conductors are left in the respective sheath-end portions so as to produce aligned cut ends of the conductors.

Preferably the apparatus includes two pairs of pressing dies and punches spaced from the second cutting blades in the direction in which the cut cable portions are pulled by the chucks, each pair of the pressing dies and punches being movable towards each other to press the exposed end portions of the conductors.

Advantageously the pressing dies are situated at opposite sides with respect to the feed path of the shielded cable.

Thus, scrap ends resulting from cutting ends of cables are prevented from scattering and are collected in sheath portions separated from the respective sheaths. The scrap ends contained in the sheath portions, which per se is waste, can be discarded without being entangled in the cutting blades, stripping blades and other moving parts of the apparatus.

The invention is diagrammatically illustrated by way of example in the accompanying drawings, in which:-
Figure 1 is a cross-sectional view showing a main portion of a contact-connecting apparatus incorporating apparatus according to the invention;
Figures 2 to 6 are cross-sectional views showing a series of operations performed by the apparatus of Figure 1;
Figure 7 is a schematic plan view showing a shielded cable being cut by stripping blades in apparatus according to the invention;
Figure 8 is a schematic plan view showing the shielded cable of figure 7 being stripped of shield portions by the stripping blades;
Figure 9 is a schematic plan view showing a previously proposed method of stripping a shielded cable of its insulating covering; and
Figure 10 is a cross-sectional view taken on the line 10-10 in Figure 10.

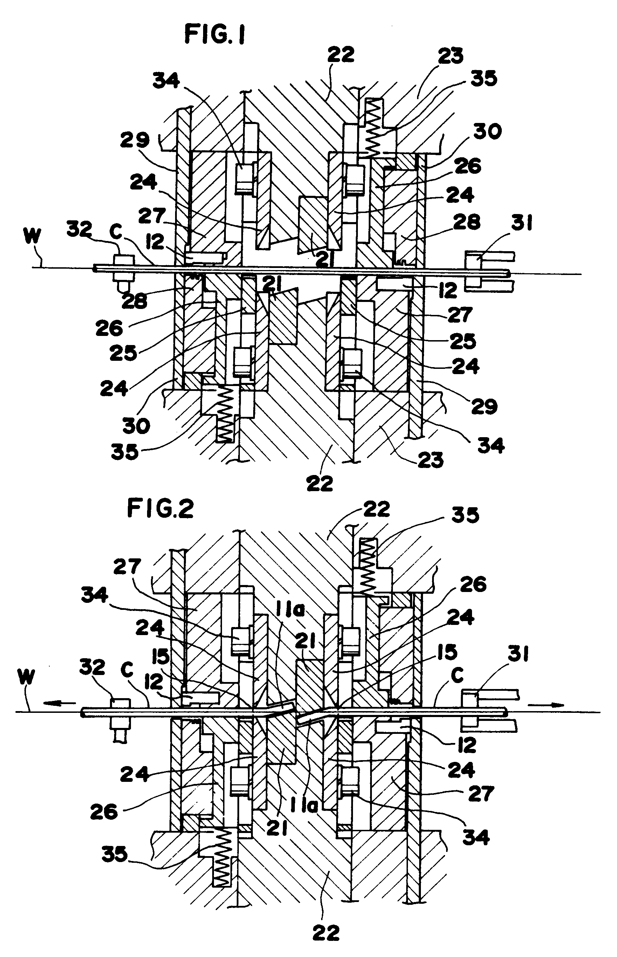

Referring to Figure 1, which shows automatic contact-connecting apparatus incorporating a device for cutting a shielded cable, a shielded cable (C) has the same structure as that of the typical shielded cable shown in Figures 9 and 10, and is supplied along a feed path (W).

A pair of cutting blades 21 is disposed adjacent the feed path (W), each blade being mounted on a respective holder 22 and the holders 22 being mutually movable toward and away from each other by means of a pneumatic cylinder (not shown).

In addition, two pairs of stripping blades 24 are secured to the side walls of the respective holders 22 by means of fastening screws 34. The two pairs of stripping blades 24 are spaced from each other a distance corresponding to a desired length of the sheath 11 to be stripped, with the cutting blades 21 being located therebetween.

Second cutting blades 25 to cut the terminals of the stripped cable are disposed adjacent the outside of the lower stripping blades 24, and are operated in association with the upper stripping blades 24. The second cutting blades 25 are secured to a lower guide 23. Springs 35 are provided to retain the cable being cut and are normally biased toward pressing dies 27.

The pressing dies 27 mate with pressing punches 28. The illustrated embodiment has two pairs of dies and punches 27, 28 which are opposed to each other with the feed path (W) located therebetween. One of the dies 27 is located above the feed path (W) and the other is located below it. This arrangement enables the fabrication of a "reversed harness" which is provided with cables having oppositely facing connectors at opposite terminals thereof.

The dies 27 and the punches 28 can be moved to a pressing position by moving the guides 23 by means of a pneumatic cylinder (not shown) so as to press the cable.

Pressers 29 and 30 can press the cable being stripped of its insulating covering. The cable (C) is gripped and moved by chucks 31 and 32 when it is stripped of its insulating covering to uncover terminals 3a and 8a.

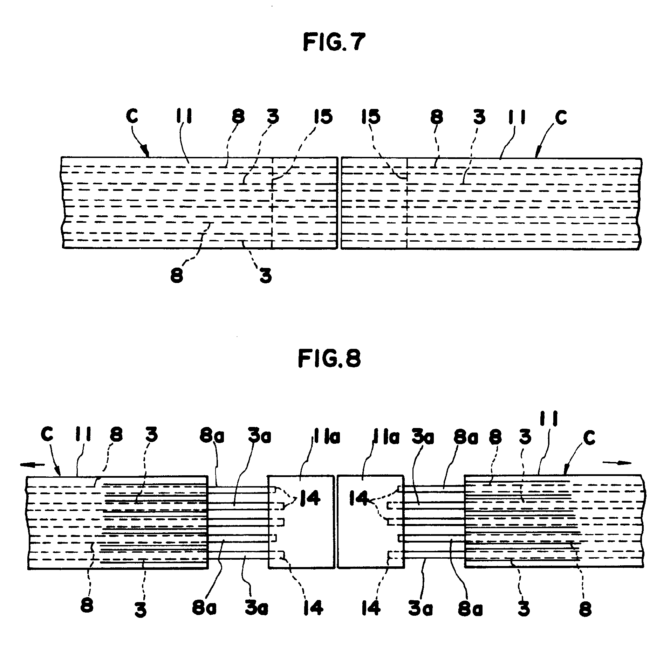

The contact-connecting apparatus is operated as follows:
The cable (C) is located at a predetermined position as shown in Figure 1. The upper and lower holders 22 are moved toward each other to cause the cutting blades 21 to cut the cable (C) into two cable portions, and the stripping blades 24 to make shallow cuts 15 in the sheath 11 of each cable portion (Figure 7).

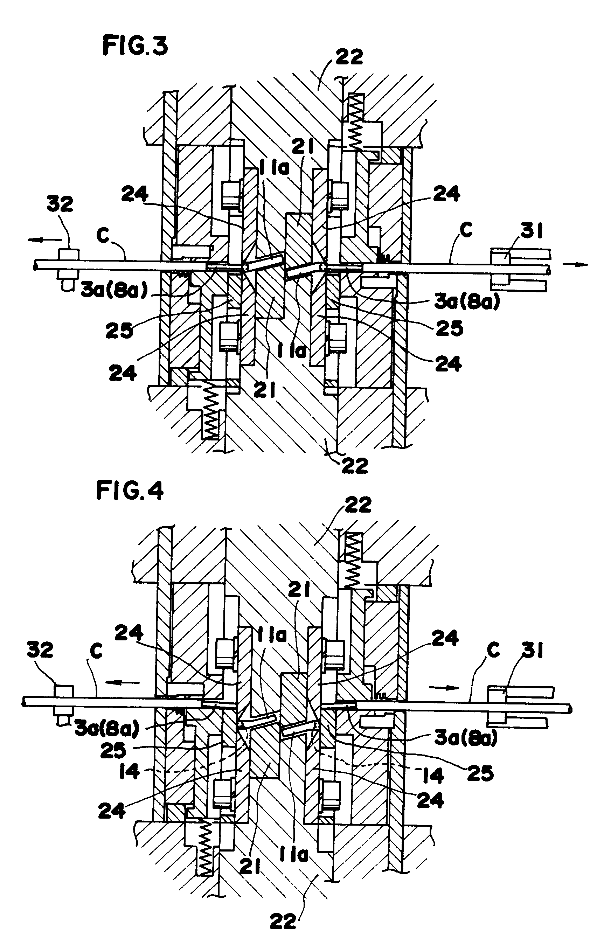

Then the chucks 31 and 32 are moved in opposite directions over a distance sufficient to cause the cut ends of the cable (C) to become separated from each other as shown in Figure 3. In this way sheath-end portions 11a of the sheath are partially stripped to uncover terminals 3a and 8a. The chucks 31 and 32 are moved, in the direction of the arrows in Figure 8, a distance such that the tip ends of the uncovered terminals 3a and 8a remain in the sheath-end portions 11a as shown in Figure 8.

Then the holders 22 are simultaneously lowered, in the course of which the upper stripping blades 24 and the second cutting blades 25 cooperatively cut the terminals 3a and 8a at positions adjacent to the respective sheath-end portions 11a so that the tip ends are aligned. Scrap ends 14 remain in the sheath-end portions 11a separated from the respective sheaths 11, and can be disposed of together therewith without scattering.

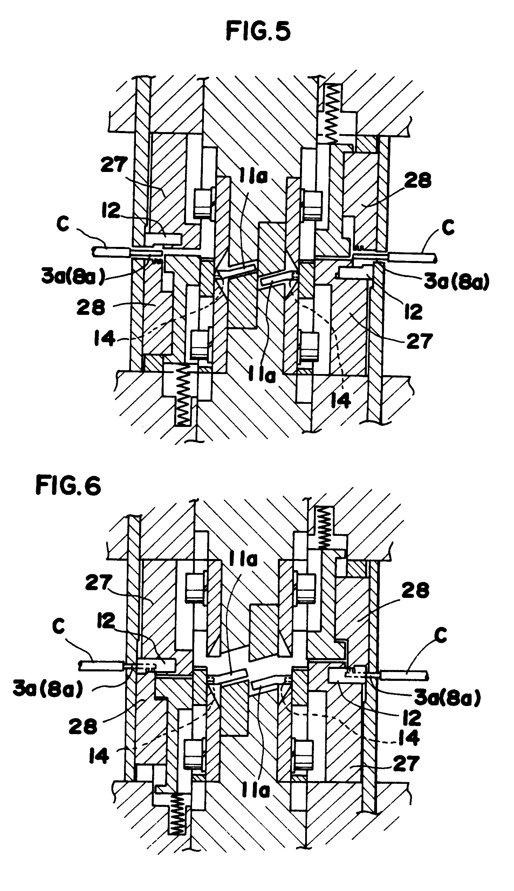

Then, as shown in Figure 5, the cable (C) is advanced by the chucks 31 and 32 until the aligned terminals 3a and 8a are positioned at a place where contact connection is effected. The pressing dies 27 and punches 28 are then moved toward each other, and the punches 28 press the terminals 3a and 8a to engage them in contacts 13 of the connectors 12 (Figure 10) maintained by the dies 27. As shown in Figure 6, the connectors 12 at the left-hand and right-hand terminals of 3a and 8a of the respective cables (C) face in opposite directions. From this it is possible to feed the left-hand cable (C) to the right by a desired length, and connect a connector 12 to its opposite terminals 3a and 8a in the aforementioned manner. In this way "reverse harnesses" can be produced which are provided with oppositely facing connectors 12 at opposite ends. The production of the "reverse harnesses" results from an arrangement in which, as shown in Figure 5, one pair of pressing dies and punches are placed oppositely to the other pair. If the two pairs are arranged in the same posture, the resulting harnesses are a regular type which has connectors 12 facing in the same direction.

The scrap ends 14 resulting from trimming the cable ends are thus not scattered but are retained in the cut off sheath-end portions 11a separated from the respective sheaths 11. The scrap ends 14 contained in the sheath-end portions 11a, which per se is waste, can be discarded without risk of being entangled in the cutting blades, stripping blades and other moving parts of the apparatus.

## Claims

1. A method of acting on the end regions of cables, the method being suitable for the production of electrical harnesses and comprising the steps of: cutting a shielded cable (C) transversely thereof into two cable portions each having a cut end with an end region proximate thereto; making shallow cuts (15) transversely of the cable portions and in the sheath (11) thereof, to define sheath end portions (11a), the shallow cuts being proximate the cut ends; pulling the cable portions in opposite directions while retaining sheath-end portions (11a) so as to separate them from the sheaths (11) at the shallow cuts (15) and thereby expose end portions (3a, 8a) of the conductors; and finally cutting the cable portions through the exposed end portions (3a, 8a), characterised in that the method is suitable for acting on the end regions of cables each comprising a plurality of conductors (3, 8) arranged in parallel with one another, in that tip ends (14) of the conductors (3, 8) remain in the severed sheath-end portions (11a), and in that the final step of cutting the cable portions is carried out outside and close to the respective sheath-end portions (11a) so as to produce aligned cut ends of the conductors.

2. An apparatus for acting on the end regions of cables, the apparatus being suitable for the production of electrical harnesses and comprising: a pair of first cutting blades (21) adapted to sever a shielded cable (C) transversely thereof into two cable portions each having a cut end with an end region proximate thereto, with the first cutting blades (21) being situated at opposite sides of a feed path (W) along which the shielded cable (C) is fed: two pairs of stripping blades (24, 24) to make shallow cuts (15) transversely of the cable portions and in the sheath (11) thereof, to define sheath end portions (11a), with the stripping blades in each pair being situated at opposite sides of the feed path, and the two pairs being spaced apart a predetermined distance in which the first cutting blades (21) are located; a pair of chucks (31, 32) to pull the respective cable portions in opposite directions so as to expose end portions (3a, 8a) of the conductors from the shallow cuts (15); and a pair of second cutting blades (25, 25) to cut the cable portions through the exposed end portions (3a, 8a) of the conductors outside and close to the sheath-end portions (11a), characterised in that the apparatus is adapted to act on the end regions of cables each comprising a plurality of conductors (3, 8) arranged in parallel with one another, the stripping blades (24, 24) cooperate with the chucks (31, 32) in such a manner that tip ends (14) of the conductors (3, 8) remain in the severed sheath-end portions (11a), and each of the second cutting blades (25, 25) cooperates with the corresponding one of each pair of the stripping blades (24) in such a manner that the tip ends (14) of the conductors (3, 8) are left in the respective sheath-end portions (11a) so as to produce aligned cut ends of the conductors.

3. An apparatus according to Claim 2, further including two pairs of pressing dies and punches (27, 28) spaced from the second cutting blades (25) in the direction in which the cable portions are pulled by the chucks (31, 32), wherein each pair of the pressing dies and punches (27, 28) are movable towards each other so that they cooperate to press the exposed end portions (3a, 8a) of the conductors.

4. An apparatus according to Claim 3, wherein the pressing dies (27) are situated at opposite sides with respect to the feed path (W) of the shielded cable (C).

## Patentansprüche

1. Verfahren zur Bearbeitung von Kabelendbereichen, geeignet zur Herstellung elektrischer Kabelbäume und mit den Stufen, in denen man ein abgeschirmtes Kabel (c) quer in zwei Kabelabschnitte zerschneidet, von denen jeder ein abgeschnittenes Ende mit einem Endbereich in nächster Nähe hierzu hat, oberflächliche Schnitte (15) quer zu den Kabelabschnitten und in deren Ummantelung (11) legt, um Ummantelungsendabschnitte (11a) zu begrenzen, wobei die oberflächlichen Schnitte in unmittelbarer Nähe der abgeschnittenen Enden liegen, die Kabelabschnitte in entgegengesetzten Richtungen zieht, während man die Ummantelungsendenabschnitte (11a) so zurückhält, daß sie von den Ummantelungen (11) an den oberflächlichen Schnitten (15) getrennt werden und dabei die Endabschnitte (3a, 8a) der Leiter freigelegt werden, und schließlich die Kabelabschnitte durch die freigelegten Endabschnitte (3a, 8a) schneidet, **dadurch gekennzeichnet**, daß das Verfahren zur Bearbeitung der Endbereiche von Kabeln geeignet ist, die jeweils mehrere parallel zueinander angeordnete Leiter (3, 8) umfassen, daß die Enden (14) der Leiter (3, 8) in den abgetrennten Ummantelungsendabschnitten (11a) bleiben und daß die Endstufe des Schneidens der Kabelabschnitte außerhalb der und nahe den betreffendenden Ummantelungsendabschnitten (11a) derart durchgeführt wird, daß ausgerichtete abgeschnittene Enden der Leiter erzeugt werden.

2. Vorrichtung zur Bearbeitung der Endbereiche von Kabeln, geeignet für die Herstellung elektrischer Kabelbäume und mit einem Paar erster Schneidblätter (21), die geeignet sind, ein abgeschirmtes Kabel (C) quer in zwei Kabelabschnitte zu trennen, von denen jeder ein abgeschnittenes Ende mit einem in dessen nächster Nähe liegenden Endbereich hat, wobei die ersten Schneidblätter (21) an gegenüberliegenden Seiten eines Vorschubweges (W) liegen, entlang welchem das abgeschirmte Kabel (C) vorgerückt wird, mit zwei Paaren von Abstreifblättern (24, 24), um oberflächliche Schnitte (15) quer zu den Kabelabschnitten und in deren Ummantelung (11) zu machen, um Ummantelungsendabschnitte (11a) zu begrenzen, wobei die Abstreifblätter in jedem Paar an gegenüberliegenden Seiten des Vorschubweges angeordnet sind und die beiden Paare einen Abstand mit einer vorbestimmten Entfernung voneinander haben, in welcher die ersten Schneidblätter (21) angeordnet sind, mit einem Paar von Spannfuttern (31, 32), um die betreffenden Kabelabschnitte in entgegengesetzten Richtungen zu ziehen und so Endabschnitte (3a, 8a) der Leiter aus den oberflächlichen Schnitten (15) zu ziehen, und mit einem Paar zweiter Schneidblätter (25, 25), um die Kabelabschnitte durch die freigelegten Endabschnitte (3a, 8a) der Leiter außerhalb der und nahe den Ummantelungsendabschnitten (11a) zu durchschneiden, **dadurch gekennzeichnet**, daß die Vorrichtung so ausgebildet ist, daß sie die Endbereiche von Kabeln bearbeitet, die jeweils mehrere parallel zueinander angeordnete Leiter (3, 8) umfassen, daß die Abstreifblätter (24, 24) mit den Spannfuttern (31, 32) in der Weise zusammenwirken, daß Enden (14) der Leiter (3, 8) in den abgetrennten Ummantelungsendabschnitten (11a) bleiben, und daß jedes der zweiten Schneidblätter (25, 25) mit dem entsprechenden eines jeden Paares der Abstreifblätter (24) in der Weise zusammenwirkt, daß die Enden (14) der Leiter (3, 8) in den betreffenden Ummantelungsendabschnitten (11a) gelassen werden, so daß ausgerichtete abgechnittene Enden der Leiter erzeugt werden.

3. Vorrichtung nach Anspruch 2 zusätzlich mit zwei Paaren von Preßwiderlagern und -stempeln. (27, 28), die im Abstand von den zweiten Schneidblättern (25) in der Richtung, in welcher die Kabelabschnitte von den Spannfuttern (21, 32) gezogen werden, angeordnet sind, wobei jedes Paar der Preßwiderlager und -stempel (27, 28) derart zueinander bewegbar ist, daß sie zusammenwirken, die freigelegten Endabschnitte (3a, 8a) der Leiter zusammenzupressen.

4. Vorrichtung nach Anspruch 3, bei der die Preßwiderlager (27) an gegenüberliegenden Seiten bezüglich des Vorschubweges (W) des abgeschirmten Kabels (C) angeordnet sind.

## Revendications

1. Procédé pour réaliser une opération sur des régions d'extrémités de câbles, le procédé étant approprié pour la production de faisceaux électriques et comprenant les étapes de : coupe d'un câble blindé (C) transversalement à celui-ci en deux parties de câble chacune ayant une extrémité coupée, une région d'extrémité étant proche de celle-ci ; réalisation de découpes peu profondes (15) transversalement aux parties de câble et dans leur gaine (11), pour définir des parties extrémités de gaine (11a), les découpes peu profondes étant proches des extrémités coupées ; traction sur les parties de câble dans des sens contraires tout en retenant les parties extrémités de gaine (11a) de manière à les séparer des gaines (11) au droit des découpes peu profondes (15) et à dénuder par ce moyen les parties extrémités (3a, 8a) des conducteurs ; et finalement coupe des parties de câble dans les parties extrémités (3a, 8a) dénudées, caractérisé en ce que le procédé est approprié pour opérer sur les régions extrémités de câbles comprenant chacun une pluralité de conducteurs (3, 8) disposés parallèlement les uns aux autres, en ce que des bouts (14) des conducteurs (3, 8) demeurent dans les parties extrémités de gaine (11a) sectionnées et en ce que l'étape finale de coupe des parties de câble est effectuée, à l'extérieur et près des parties extrémités de gaine (11a) respectives, de manière à produire des extrémités coupées alignées des conducteurs.

2. Appareil pour réaliser une opération sur des régions d'extrémités de câbles, le procédé étant approprié pour la production de faisceaux électriques et comprenant : une paire de premières lames de coupe (21) conçues pour couper un câble blindé (C), transversalement à celui-ci, en deux parties de câble chacune ayant une extrémité coupée, une région d'extrémité étant proche de celle-ci; les premières lames de coupe (21) étant situées au droit de côtés opposés d'un trajet d'alimentation (W) suivant lequel le câble blindé (C) est délivré. Deux paires de lames à dénuder (24, 24) pour réaliser des découpes peu profondes (15) transversalement aux parties de câble et dans leur gaine (11), pour définir des parties extrémités de gaine (11a), les lames à dénuder dans chaque paire étant situées au droit de côtés opposés du trajet d'alimentation et les deux paires étant écartées d'une distance prédéterminée dans laquelle les premières lames de coupe (21) sont situées ; une paire de mâchoires (31, 32) pour tirer les parties de câble respectives dans des sens contraires de manière à dénuder des parties extrémités (3a, 8a) des conducteurs à partir des découpes peu profondes (15) ; et une paire de secondes lames de coupe (25, 25) pour couper les parties de câble dans les parties extrémités (3a, 8a) dénudées des conducteurs à l'extérieur et près des parties extrémités de gaine (11a), caractérisé en ce que l'appareil est approprié pour opérer sur les régions extrémités de câbles comprenant chacun une pluralité de conducteurs (3, 8) disposés parallèlement les uns aux autres, en ce que les lames à dénuder (24, 24) coopèrent avec les mâchoires (31, 32) de telle manière que des bouts (14) des conducteurs (3, 8) demeurent dans les parties extrémités de gaine (11a) sectionnées, et en ce que chacune des secondes lames de coupe (25, 25) coopère avec l'une correspondante de chaque paire de lames à dénuder (24), de telle manière que les bouts (14) des conducteurs (3, 8) sont laissés dans les parties extrémités de gaine (11a) respectives de manière à produire des extrémités coupées alignées des conducteurs.

3. Dispositif selon la revendication 2, comprenant de plus deux paires de poinçons et matrices de serrage (27, 28) espacées des secondes lames de coupe (25) dans la direction dans laquelle les parties de câble coupées sont tirées par les mâchoires (31, 32), chaque paire de matrices et poinçons de serrage (27, 28) étant mobile en direction l'une de l'autre de sorte qu'elles coopèrent pour presser les parties extrémités (3a, 8a) dénudées des conducteurs.

4. Dispositif selon la revendication 3, dans lequel les matrices de serrage (27) sont situées de chaque côté par rapport au trajet d'alimentation (W) du câble blindé (C).
